# EUROPÄISCHE PATENTANMELDUNG

(11) **EP 1 266 562 A1**
(43) Veröffentlichungstag der Anmeldung: **18.12.2002**
(21) Anmeldenummer: 01202216.6
(22) Anmeldetag: 11.06.2001
(51) Int. Cl.: A01F 15/07, A01F 15/08

(54) **Rundballenpresse für landwirtschaftliche Halmgüter**

(71) Anmelder: Lely Enterprises AG, 6300 ZUG (CH)
(72) Erfinder: Ehrenpfort, Uwe Wiechart, 38304 Wolfenbüttel (DE); Honhold, Joost, 38302 Wolfenbüttel (DE); Lühr, Kord Hinrich, 38302 Wolfenbüttel (DE)
(74) Vertreter: Corten, Maurice Jean F.M.

(57) **Zusammenfassung**

Die Erfindung betrifft eine Rundballenpresse (1) für landwirtschaftliche Halmgüter, welche in Kombination mit einer Wickelvorrichtung ( 3) zum Umwickeln eines Rundballens (42a) mit Folie auf wenigstens einem Fahrwerk angeordnet ist, wobei zwischen der Rundballenpresse (1) und der Wickelvorrichtung (3) eine schiefe Ebene als Abrolleinrichtung (20) für den fertigen Rundballen (42a) vorgesehen ist. Um mit einfachen Mitteln und ohne großen Kraftaufwand eine sichere und schnellstmögliche Übergabe des Rundballens (42a) an die Wickelvorrichtung (3) zu gewährleisten, wird erfindungsgemäß vorgeschlagen, daß die Abrolleinrichtung (20) verstellbar ist. Durch eine steilere Stellung der Abrolleinrichtung (20) rollt der Rundballen (42a) schnell aus dem Schwenkbereich (43) der Rundballenpresse (1) hinaus, so daß das Hintergehäuse (10) genauso schnell wie bei Rundballenpressen (1) im Solobetrieb geschlossen werden kann.

## Beschreibung

Die Erfindung betrifft eine Rundballenpresse nach dem Oberbegriff des Patentanspruches 1.

Bei Rundballenpressen, denen eine Wickelvorrichtung nachgeschaltet ist, stellt die Übergabe des Rundballens von der Rundballenpresse an die Wickelvorrichtung ein kritisches Problem dar.

Die vorstehend beschriebene Rundballenpresse, von der die Erfindung ausgeht, läßt sich der DE 41 38 499 A1 entnehmen. Hierbei schließt sich unterhalb des Förderbodens der Rundballenpresse eine ortsfest angeordnete Ballenabrolleinrichtung mit konstanter, d. h. nicht veränderbarer Neigung an. In Fahrtrichtung hinter der Abrolleinrichtung ist ein Ballenladebügel angeordnet, der um eine der Wickelvorrichtung benachbarte Drehachse hydraulisch verschwenkbar ist und mit einem ebenfalls hydraulisch verschwenkbaren Wickeltisch zusammenwirkt. Nach vollständigem Aufklappen des Hintergehäuses soll der Rundballen über die Abrolleinrichtung auf den Ballenladebügel rollen, der den Rundballen dann nach dem Überkopfprinzip auf den in Fahrtrichtung leicht geneigten Wickeltisch heben soll.

Diese vorbekannte Rundballenpresse weist grundsätzlich folgende Nachteile auf:
- Die Abrolleinrichtung kann nur eine relativ kleine Neigung zur Horizontalen aufweisen, weil sich sonst das Hintergehäuse nicht öffnen bzw. schließen läßt. Bei Hangabwärtsbetrieb ist somit keine sichere Übergabe an den Ballenladebügel gewährleistet.
- Die Abrolleinrichtung beginnt erst mit relativ großem Abstand hinter dem Ende des Förderbodens. Dadurch fällt der Rundballen zunächst auf andere ortsfeste Rahmenteile und wird abgebremst. Der Abrollvorgang zum Ballenladebügel wird dadurch verzögert.
- Der äußere Schwenkbogen des Hintergehäuses überschneidet sich mit dem äußeren Schwenkbogen des Ballenladebügels bzw. der Außenkante des mit dem Ballenladebügel verschwenkten Rundballens. Daraus resultiert der entscheidende Zeitnachteil, daß das Hintergehäuse erst dann wieder geschlossen werden kann, wenn der Rundballen seine Wickelposition auf dem Wickeltisch erreicht hat. Die Durchsatzleistung der Kombination wird dadurch erheblich reduziert.
- Der Ballenladebügel muß das relativ große Gewicht eines Rundballens an einem relativ langen Hebelarm bewältigen mit der Folge, daß die Konstruktion schwer und aufwendig ist.
- Die Baulänge der Kombination ist relativ groß und wirkt sich bei engen Zufahrten und Wendemanövern auf dem Feld nachteilig aus.

Ähnliche Nachteile weist auch die in der GB 2221203 A dargestellte und beschriebene Kombination aus Rundballenpresse mit angehängter Wickelvorrichtung auf.

In der DE 197 31 520 A1 ist eine Rundballenpresse dargestellt und beschrieben, welche mit einer Wickelvorrichtung auf demselben Fahrgestell angeordnet ist. Hierbei ist eine verfahrbare Transportvorrichtung zwischen Rundballenpresse und Wickelvorrichtung vorgesehen, die so gestaltet und verschiebbar ist, daß das Hintergehäuse der Rundballenpresse unmittelbar nach dem Ballenausstoß unabhängig von der Position der Transportvorrichtung mit oder ohne Rundballen zu öffnen oder zu schließen ist. Vorteilhaft ist, daß keine aufwendigen Hebevorrichtungen für den schweren Ballen notwendig sind. Diese Vorrichtung weist aber den großen Nachteil auf, daß ein Rundballen aufgrund des relativ großen freien Abstandes zwischen hinterer unterer Preßwalze der aufgeklappten Rundballenpresse und der in Fahrtrichtung vordersten Position des Wickeltisches unmittelbar hinter der Preßwalze nach unten fällt und in dem Freiraum festgeklemmt wird, anstatt auf die Transportvorrichtung abgegeben zu werden. Nachteilig ist darüber hinaus der hohe konstruktive Aufwand für die gleichzeitig horizontal und vertikal verschiebbare Transportvorrichtung.

Der in der EP 1 077 025 A1 dargestellten und beschriebenen Funktionseinheit ist eine Übergabeeinrichtung entnehmbar, bestehend aus zwei einander zuarbeitenden Ballenhebevorrichtungen, die erst nach Öffnen des Hintergehäuses und nach ausgeworfenem Rundballen nacheinander betätigbar sind. Ein Zeitverlust entsteht, weil die in Fahrtrichtung vordere Hebevorrichtung zur Ballenübergabe erst nach oben und dann wieder in ihre Ausgangslage zurückgeschwenkt sein muß, bevor das Hintergehäuse geschlossen werden kann. Darüber hinaus baut die Funktionseinheit relativ lang und schwer wegen der erforderlichen langen Hebelarme für die in Fahrtrichtung gesehen hintere Übergabeeinrichtung.

Bei im Solobetrieb arbeitenden Rundballenpressen, siehe beispielsweise G 82 13 107 U1 und DE 36 07 040 A1 sind Abrolleinrichtungen an sich bekannt, jedoch besteht hier nicht das Problem, einen Rundballen schnell oberhalb des Erdbodens an eine Wickelvorrichtung zu übergeben.

Der Erfindung liegt die Aufgabe zugrunde, die eingangs beschriebene Rundballenpresse so zu verbessern, daß mit einfachen Mitteln und ohne großen Kraftaufwand eine sichere und schnellstmögliche Übergabe des Rundballens an die Wickelvorrichtung gewährleistet ist.

Ausgehend von der eingangs beschriebenen Rundballenpresse wird diese Aufgabe dadurch gelöst, daß die Abrolleinrichtung verstellbar ausgebildet ist. Hinsichtlich der weiteren Ausgestaltung der Erfindung wird auf Ansprüche 2 bis 37 verwiesen.

Durch die erfindungsgemäße Verstellbarkeit der Abrolleinrichtung ist diese nicht mehr an den konstruktiv sehr begrenzten freien Bauraum unterhalb des in geschlossener Stellung befindlichen Hintergehäuses gebunden, so daß diese erfindungsgemäß bereits kurz nach Öffnungsbeginn des Hintergehäuses wesentlich steiler gestellt werden kann als alle zur Zeit bekannten Ballenabrolleinrichtungen mit fest vorgegebener Neigung. Auf diese Art und Weise wird es ermöglicht, die Rollenergie des Rundballens zu nutzen, damit der Rundballen oberhalb des Erdbodens weit genug aus dem Schwenkbogenbereich des Hintergehäuses und bis zum Wickeltisch rollt. Das Hintergehäuse kann dadurch genauso schnell geschlossen werden und der Preßvorgang beginnen, wie bei im Solobetrieb arbeitenden Rundballenpressen.

In Ausgestaltung der Erfindung wird vorgeschlagen, daß die Abrolleinrichtung um wenigstens eine horizontale, quer zur Abrollrichtung des Rundballens gelegene Drehachse beweglich ist. Dabei kann die Achse entweder an der Rundballenpresse oder am Tragrahmen von Rundballenpresse und Wickelgerät angeordnet sein. Eine Drehachse am Tragrahmen hat den Vorteil, daß an der Rundballenpresse praktisch keine Änderungen erforderlich sind.

Die Abrolleinrichtung nimmt bei geöffneter oder teilgeöffneter Position des Hintergehäuses wenigstens eine Arbeitsstellung und bei geschlossener Position des Hintergehäuses eine Ruhestellung ein. Aufgrund des freien Raumes nach Öffnen des Hintergehäuses kann die Neigung genügend groß eingestellt werden, so daß beispielsweise drei Arbeitsstellungen voreinstellbar sind: Hangaufwärts, Ebene, Hangabwärts.

Um die Rollenergie des Rundballens optimal zu nutzen, ist es vorteilhaft, wenn das in Fahrtrichtung vordere Ende der Abrolleinrichtung in dem nach Aufklappen des Hintergehäuses freigewordenen Raum direkt an die Preßelemente im Vordergehäuse anschließt. Dadurch gelangt der Rundballen unmittelbar hinter der in Fahrtrichtung gesehen letzten Preßwalze auf die Abrolleinrichtung und beginnt schnellstmöglich seine Rollbewegung auf der schiefen Ebene.

Zweckmäßigerweise liegt das in Fahrtrichtung hintenliegende Ende der Abrolleinrichtung in ihrer Arbeitsstellung während des Abrollens des Rundballens an einem gestellfesten Anschlag auf, so daß die (hohen) Gewichtskräfte des Rundballens in den Tragrahmen eingeleitet werden und eine genaue Höhenposition für die sich anschließende, zweite Abrolleinrichtung gewährleistet ist.

Um sicherzustellen, daß der Rundballen schnellstmöglich auf die Abrolleinrichtung gelangt, wird diese bereits während des Öffnens des Hintergehäuses, d. h. nach ca. 20° Öffnungswinkel des Hintergehäuses in ihre Arbeitsstellung verstellt.

Die weitere Ausgestaltung der Erfindung sieht vor, daß der ersten Abrolleinrichtung eine zweite, als Ballenhalteeinrichtung ausgebildete Abrolleinrichtung nachgeschaltet ist, welche in einer Arbeitsstellung eine verlängerte schiefe Ebene der ersten Abrolleinrichtung bildet, auf der der Rundballen bis zum Wickeltisch rollt. Der Hebelarm zum Überführen des Rundballens in die Wickelposition ist relativ klein, da der Rundballen bereits auf der Abrolleinrichtung in seiner Endposition am Wickeltisch anliegt. Die Bodenfreiheit wird nur kurzzeitig in unterer Stellung der Ballenhalteeinrichtung eingeschränkt.

Für die Betätigung der Abrolleinrichtung bietet sich das Hintergehäuse deshalb an, weil dann zusätzliche Hilfsantriebe entfallen.

Grundsätzlich ist es möglich, die Neigungen der Abrolleinrichtung manuell voreinzustellen. Bei Betätigung des Hintergehäuses oder anderer Ansteuerung wird dann die Abrolleinrichtung in die Stellung mit der gewünschten Neigung gebracht.

Komfortabler ist eine halbautomatische Lösung, die vorsieht, daß die Abrolleinrichtung mit einer Steuer- und/oder Bedieneinheit in Wirkverbindung steht, an der mehrere Neigungen der Abrolleinrichtung voreinstellbar und vom Bediener vom Schlepper aus per Tastendruck einstellbar sind.

Schließlich besteht auch die Möglichkeit, die Neigung der Abrolleinrichtung automatisch in Abhängigkeit von der gemessenen Schiefstellung der Rundballenpresse bzw. der Wickelvorrichtung zu steuern.

Eine kompakte, gut manövrierbare Funktionseinheit wird dann erreicht, wenn die Rundballenpresse und die Wickelvorrichtung auf demselben Fahrwerk angeordnet sind.

Zur weiteren Erläuterung der Erfindung wird auf die Zeichnungen und auf die nachfolgende Beschreibung mehrerer Ausführungsbeispiele verwiesen. In den Zeichnungen zeigen:
- Fig. 1: eine schematische Seitenansicht einer erfindungsgemäßen Rundballenpresse mit einer aufgesattelten Wickelvorrichtung während des Preß- und/oder Wickelvorganges, wobei sich die Abrolleinrichtung in Ruhestellung befindet.

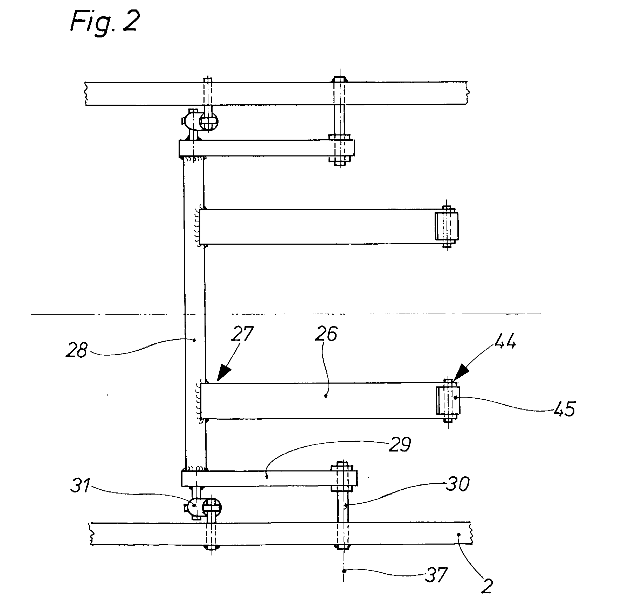

- Fig. 2: eine Draufsicht auf die Abrolleinrichtung in Figur 1 gemäß der Linie A - A in Blickrichtung der Pfeile,
- Fig. 3 bis 6: Seitenansichten gemäß Figur 1 mehrerer aufeinanderfolgender Funktionen,
- Fig. 7: eine schematische Seitenansicht einer zweiten Ausführungsform einer Abrolleinrichtung mit in Volllinie dargestellter Ruhestellung bei geschlossenem Hintergehäuse und in Strichlinie gezeichneter Arbeitsstellung bei teilgeöffnetem Hintergehäuse,
- Fig. 8: eine Ansicht gemäß Fig. 7 einer dritten Ausführungsform einer Abrolleinrichtung und
- Fig. 9: eine Draufsicht auf die Abrolleinrichtung gemäß Figur 8.

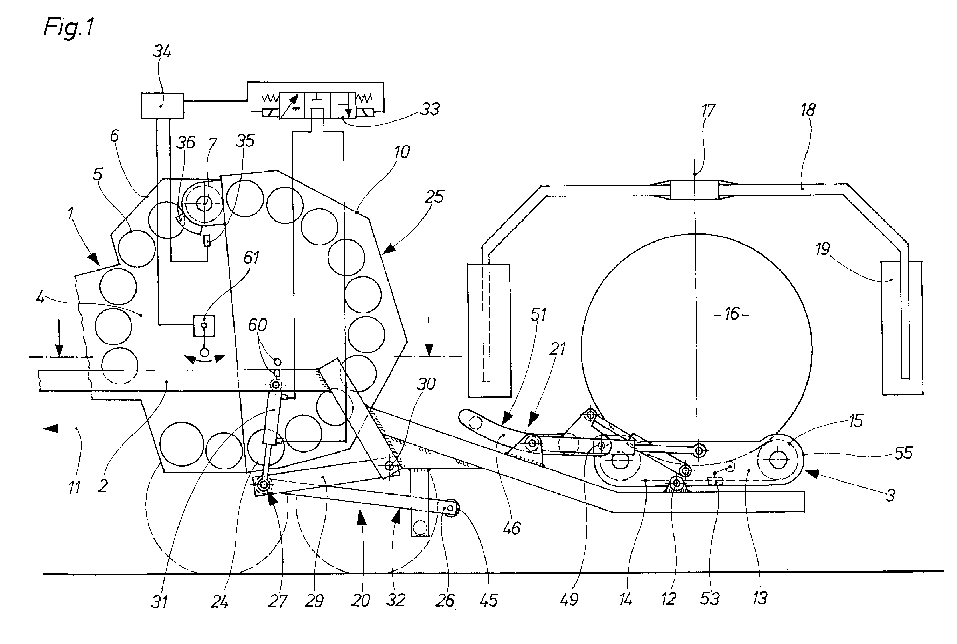

Die in Figur 1 dargestellte Rundballenpresse 1 ist durch einen Tragrahmen 2 mit einer Wickelvorrichtung 3 verbunden. Rundballenpresse 1 und Wickelvorrichtung 3 werden von einem gemeinsamen Fahrwerk getragen, von dem übersichtshalber nur die Radumfänge eines zweiachsigen Fahrwerks angedeutet sind. Der Tragrahmen 2 kann zweiteilig ausgeführt sein, um die Wickelvorrichtung 3 für einen Solobetrieb der Rundballenpresse 1 und/oder der Wickelvorrichtung 3 abzubauen.

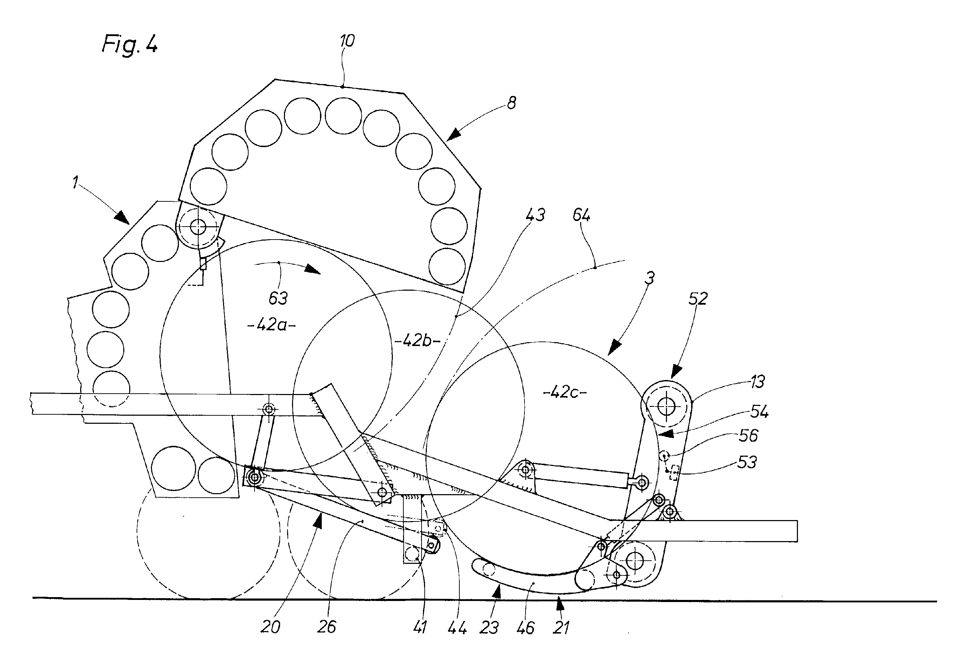

Die Rundballenpresse 1 ist beispielsweise aus der DE 24 43 838 C3 bekannt. Sie weist ein Pressengehäuse mit einem Preßraum 4 auf, der von umlaufenden, antreibbaren Preßelementen 5 gebildet wird. Das Pressengehäuse besteht aus einem gestellfesten Vordergehäuse 6 und einem um eine obere Achse 7 in eine Entladestellung 8, siehe Fig. 4, für den fertigen Rundballen 9 aufklappbaren Hintergehäuse 10.

Die Wickelvorrichtung 3 besteht im wesentlichen aus einem um eine quer zur Fahrtrichtung 11 liegende Achse 12 nach vorn und hinten kippbaren Wickeltisch 13 mit antreibbaren, von Förderbändern 14 umschlungenen Rollen 15, die einen Rundballen 16 tragen und einem um eine hochgelegene, vertikale Achse 17 drehbaren Doppel-Wickelarm 18 mit zwei Folienrollen 19 , der den Rundballen 16 während seiner Rotation um eine horizontale Zylinderachse umkreist und dabei mit Folie einwickelt. Übersichtshalber ist der Doppel-Wickelarm 18 nur in Fig. 1 dargestellt.

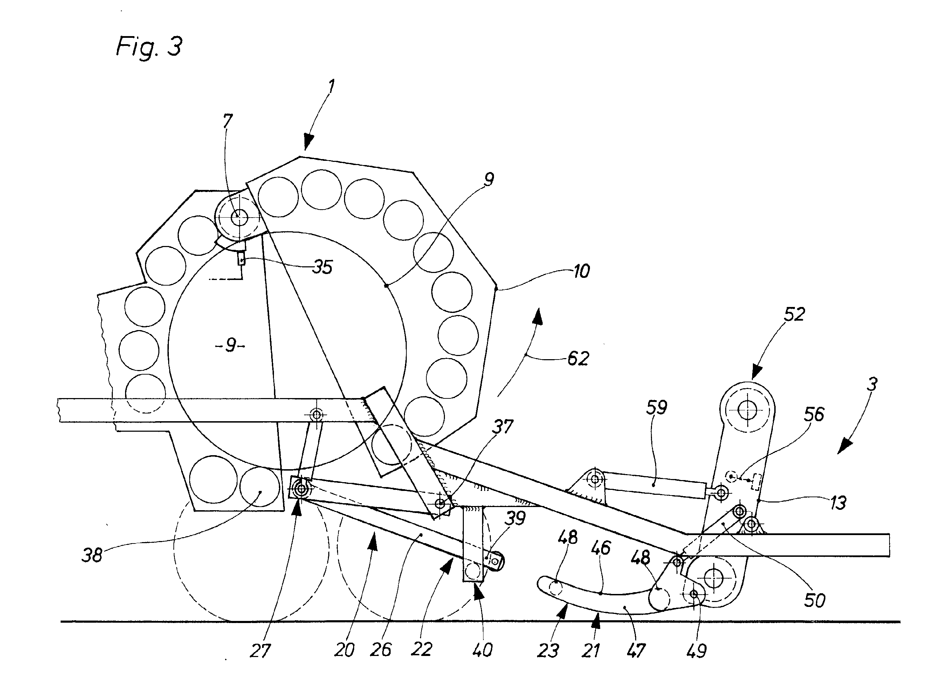

Die Übergabe eines Rundballens 9 von der Rundballenpresse 1 zur Wickelvorrichtung 3 erfolgt durch zwei Abrolleinrichtungen 20, 21, die in ihren Arbeitsstellungen 22, 23, siehe Figuren 3 und 4, eine schiefe Ebene bilden, die oberhalb des Erdbodens am Wickeltisch 13 endet.

Die erste Abrolleinrichtung 20 besteht aus zwei im Abstand nebeneinander angeordneten, unterhalb der ersten Preßwalze 24 des in geschlossener Stellung 25 befindlichen Hintergehäuses 10 beginnenden und sich in Fahrtrichtung 11 gesehen nach hinten erstreckenden Rampen 26.

Die Rampen 26 sind in einem Abstand nebeneinander angeordnet, der kleiner ist als die Ballenbreite. Die vorderen Enden 27 der Rampen 26 sind an einem Querträger 28 befestigt, der sich beidseitig nach außen über die Preßraumbreite erstreckt. Mit dem Querträger 28 sind Längslenker 29 drehfest verbunden, die auf am Tragrahmen 2 befestigten Zapfen 30 verschwenkbar sind. Der Querträger 28 ist beidseitig über Hydrozylinder 31 mit dem Tragrahmen 2 verbunden. In der in Figur 1 dargestellten Ruhestellung 32 der Abrolleinrichtung 20 sind die Hydrozylinder 31 ausgefahren. Die Hydrozylinder 31 stehen in Wirkverbindung mit einem Hydroventil 33, einer Steuer- und/oder Bedieneinheit 34 und einem Sensor 35, der bei Öffnung des Hintergehäuses 10, beispielsweise um ca. 20°, ein Schaltsegment 36 überläuft und Signale an das Steuer- und/oder Bediengerät 34 sendet oder auch direkt das Hydroventil 33 ansteuert, worauf die Rampen 26 um die von den Zapfen 30 gebildete Drehachse 37 in die in Fig. 3 dargestellte Arbeitsstellung 22 schwenken. Beim Bewegen der Abrolleinrichtung 20 aus der Ruhestellung 32 in die Arbeitsstellung 22 wird das vordere Ende 27 der Abrolleinrichtung 21 in etwa vertikaler Richtung in den nach Aufklappen des Hintergehäuses 10 freigewordenen Raum hinter die Preßwalze 38 angehoben. Dadurch gelangt der Rundballen 9 unmittelbar nach Verlassen des Preßraumes 4 auf die Abrolleinrichtung 20.

In der Arbeitsstellung 22 liegen die hinteren freien Enden 39 der Rampen 26 auf einem Anschlag 40 auf, der von einem am Tragrahmen 2 befestigten Querrohr 41 gebildet wird und in vertikaler Richtung verstellbar sein kann. Die Neigung und die Länge der Rampen 26 sind in ihrer Arbeitsstellung 22 so dimensioniert, daß der Rundballen 42a, b, c auf der zweiten, die schiefe Ebene der ersten Abrolleinrichtung 20 verlängernden Abrolleinrichtung 21 bis zum Wickeltisch 13 rollt und dabei außerhalb des äußeren Schwenkbogens 43 des Hintergehäuses 10 gelangt, so daß das Hintergehäuse 10 schnellstmöglich geschlossen werden kann, d. h. genauso schnell als wäre keine Wickelvorrichtung 3 nachgeschaltet. Darüber hinaus müssen sich die Rampen 26 in ihrer Ruhestellung 32 so weit nach hinten erstrecken, daß ein Rundballen 42c aus dem äußeren Schwenkbogenbereich 43 ferngehalten wird, z. B. bei Betrieb hangabwärts, wenn der Rundballen 42c zum Zurückrollen neigt, siehe gestrichelt gezeichnete Rampenenden 44 in Figur 4.

Um eine Beschädigung des Rundballens bzw. seiner Umhüllung beim Zurückrollen zu vermeiden, können die freien Rampenenden 44 jeweils eine Rolle 45 aufweisen. Die Rampen können zur Anpassung an unterschiedliche Ballendurchmesser auch längeneinstellbar ausgebildet sein. Zum Zurückschwenken der Rampen aus der Arbeitsstellung in die Ruhestellung ist auch die Verwendung eines Federelementes möglich, so daß ein einfachwirkender Hydrozylinder ausreicht. Anstelle des Anschlages 40 am Tragrahmen 2 könnte auch eine Verstell- und Feststelleinrichtung dienen, die an wenigstens einer Rampe 26 und am ortsfesten Vordergehäuse 6 angreift. Im Rahmen der Erfindung kann die Abrolleinrichtung anstelle einer geraden schiefen Ebene auch gekrümmt oder mehrteilig mit einer Knickachse ausgebildet sein.

Die zweite Abrolleinrichtung 21 besteht aus einem rechteckförmigen Bügel 46, dessen Längsstreben 47 entsprechend der Ballenkontur leicht nach unten gekrümmt sind, innerhalb der Ballenbreite liegen und durch Querverstrebungen 48 miteinander verbunden sind. Der Bügel 46 ist um eine Drehachse 49, die parallel zur Drehachse 37 der ersten Abrolleinrichtung 20 liegt, drehbar am Wickeltisch 13 angelenkt. Hydrozylinder 50, die einenends an den Längsstreben 47 und anderenends am Wickeltisch 13 angelenkt sind, dienen dazu, um den Bügel 46 in eine Arbeits- 23 oder in eine Ruhestellung 51, siehe Fig. 1, zu bringen. In Arbeitsstellung 23 hat der Bügel 46 die Funktion einer Abrolleinrichtung 21, die sich als Verlängerung an die erste Abrolleinrichtung 20 anschließt und den Rundballen 42c gegen den in einer Ladestellung 52 befindlichen Wickeltisch 13 rollen läßt, der in dieser Stellung etwa einen Winkel von 90° mit der Abrolleinrichtung 21 bzw. der schiefen Ebene einnimmt. Am Wickeltisch 13 ist eine Tasteinrichtung 53 vorgesehen, die ein Signal an die Steuer-/Bedieneinheit 34 meldet, daß der Rundballen 42c seine Endposition 54 auf der zweiten Abrolleinrichtung 21 erreicht hat. Dieses Signal dient beispielsweise dazu, um die Schließung des Hintergehäuses 10 auszulösen und ist gleichzeitig eine Freigabe dafür, daß der Wickeltisch 13 in seine Wickelstellung 55 schwenkt. Die Tasteinrichtung 53 kann beispielsweise aus einem gefederten Tasthebel 56 mit Schaltelement bestehen. Bei unbelastetem, d. h. bei leerem Wickeltisch 13 nimmt der Tasthebel 56 eine Stellung gemäß Fig. 3 ein. Läuft ein Rundballen 42c in Ladestellung 52 gegen den Wickeltisch 13, verschwenkt der Tasthebel 56 gemäß Fig. 4. Während der Schwenkung des Wickeltisches 13 aus seiner Ladestellung 52 in seine horizontale Wickelstellung 55 bleibt die Stellung des Bügels 46 relativ zum Wickeltisch 13 unverändert, d. h. der Bügel 46 dient in der Arbeitsstellung 23 auch als Ballenhalteeinrichtung, da diese den Rundballen 42c beim Verschwenken des Wickeltisches 13 festhält. Hat der Wickeltisch 13 seine horizontale Wickelstellung 55 erreicht, schwenkt der Bügel 46 vor Wickelbeginn aus der Umlaufbahn des Wickelarmes 18 hinaus in die zum Wickeltisch 13 parallele Ruhestellung 51, siehe Fig. 1. Zum Entladen des fertig gewickelten Rundballens 57 vom Wickeltisch 13 wird dieser kurzzeitig nach hinten in eine Entladestellung 58 gekippt. Die Verschwenkung des Wickeltisches 13 erfolgt durch Hydrozylinder 59, die am Tragrahmen 2 und am Wickeltisch 13 angelenkt sind. Bei schwierigem Hangabwärtsbetrieb kann es passieren, daß der Rundballen nicht ganz den Wickeltisch erreicht, weil die schiefe Ebene praktisch in der Horizontalen liegt. Um hier Abhilfe zu schaffen, sind zur Einstellung unterschiedlicher Neigungen der Rampen 26 relativ zum Erdboden bzw. zur Rundballenpresse 1 mehrere versetzte Zapfen 60, siehe Fig. 1, am Tragrahmen 2 zur verstellbaren Anlenkung der Hydrozylinder 31 vorgesehen. Dadurch kann in starken Hanglagen die Neigung der Abrolleinrichtung 20 zusätzlich vergrößert oder bei Bedarf verringert werden. Die Betätigung in Abhängigkeit vom Hintergehäuse 10 bleibt unverändert, kann aber auch manuell durch direkte Ansteuerung der Hydrozylinder 31 erfolgen. Bei halbautomatischer Betriebsart werden z. B. verschiedene Neigungen vorprogrammiert, z. B. für Hangabwärts-, Hangaufwärtsbetrieb oder Ebene und per Tastendruck vom Bediener vom Schlepper aus gewählt. Der vollautomatische Betrieb sieht einen Neigungssensor 61 an der Rundballenpresse 1 oder am Tragrahmen 2 vor, der z. B. die Längsneigung der Rundballenpresse 1 zur Vertikalen mißt und die Meßsignale an eine Steuer-Auswerte- und Recheneinheit meldet, die die Verstellung der Neigung der Rampen 26 automatisch steuert in Abhängigkeit von der Schiefstellung der Rundballenpresse 1.

Die Arbeitsweise ist wie folgt:

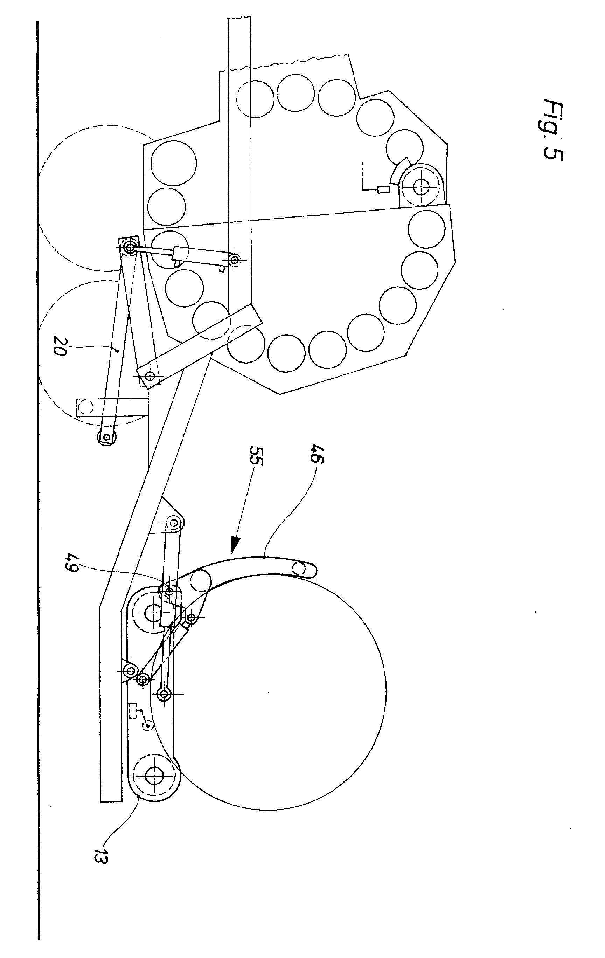

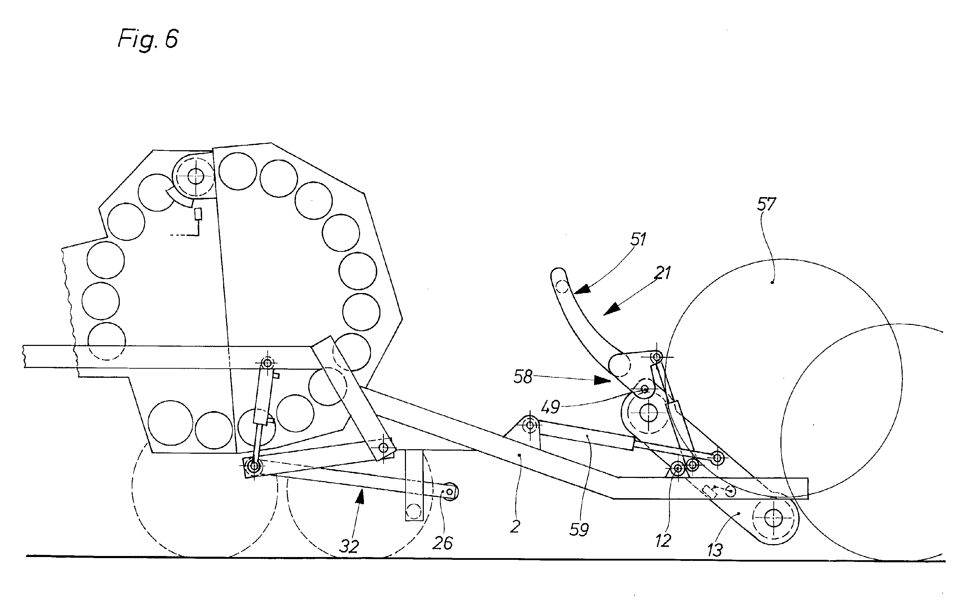

Während des Preßvorganges und/oder des Wickelvorganges nehmen die Funktionselemente die in Figur 1 gezeichneten Positionen ein: Das Hintergehäuse 10 ist in geschlossener Stellung 25, die Abrolleinrichtungen 20, 21 in ihren Ruhestellungen 32, 51 und der Wickeltisch 13 in Wickelstellung 55. Sobald in der Rundballenpresse 1 ein Rundballen 9 seine gewünschte Preßdichte erreicht und der Rundballen 9 mit Bindematerial umhüllt ist, wird durch ein Signal, z. B. abgeleitet von der Beendigung der Bindung, das Hintergehäuse 10 in Richtung des Pfeiles 62 aufgeklappt. Nach etwa 20° Öffnungsweg läuft der Sensor 35 über das Schaltsegment 36 und gibt ein Signal an die Steuer/Bedieneinheit 34, die eine Betätigung der Hydrozylinder 31, 50, 59 bewirkt, so daß die Abrolleinrichtungen 20, 21 und der Wickeltisch 13 in die in Fig. 3 gezeigten Stellungen 22, 23, 52 bewegt werden. Erreicht das Hintergehäuse 10 die in Figur 4 gezeigte Entladestellung 8, rollt der Rundballen 42a über die letzte Preßwalze 24 im Vordergehäuse 6, die als Kippkante dient, auf den Abrolleinrichtungen 20, 21 in Richtung des Pfeiles 63 gegen den Wickeltisch 13 in die Endposition 54 und betätigt dabei die Tasteinrichtung 53, die über das Hydroventil 33 bzw. die Steuereinheit 34 bewirkt, daß das Hintergehäuse 10 in seine geschlossene Stellung 25 fährt, die Abrolleinrichtung 20 in ihre Ruhestellung 32 und der Wickeltisch 13 mit dem Rundballen 42c in die Wickelstellung 55, wie in Fig. 5 dargestellt. Der Schwenkbogen 43 des Hintergehäuses 10 und der Schwenkbogen 64 der äußeren Ballenkante überschneiden sich während der Schwenkung des Wickeltisches 13 nicht, so daß alle Bewegungsvorgänge unabhängig voneinander und schnellstmöglich erfolgen und ein neuer Preßzyklus beginnen kann. Vor Wickelbeginn wird die Ballenhalteeinrichtung 21 bzw. Abrolleinrichtung in die in Figur 1 dargestellte Ruhestellung 51 geschwenkt. Pressen und Wickeln erfolgen gleichzeitig. Bei Beendigung des Wickelvorganges wird der Wickeltisch 13 in die in Fig. 6 gezeichnete Entladestellung 58 geschwenkt und der Rundballen 57 auf den Erdboden entladen. Ist der Preßvorgang des nächsten Ballens beendet, beginnt ein neuer Übergabezyklus gemäß Figur 3.

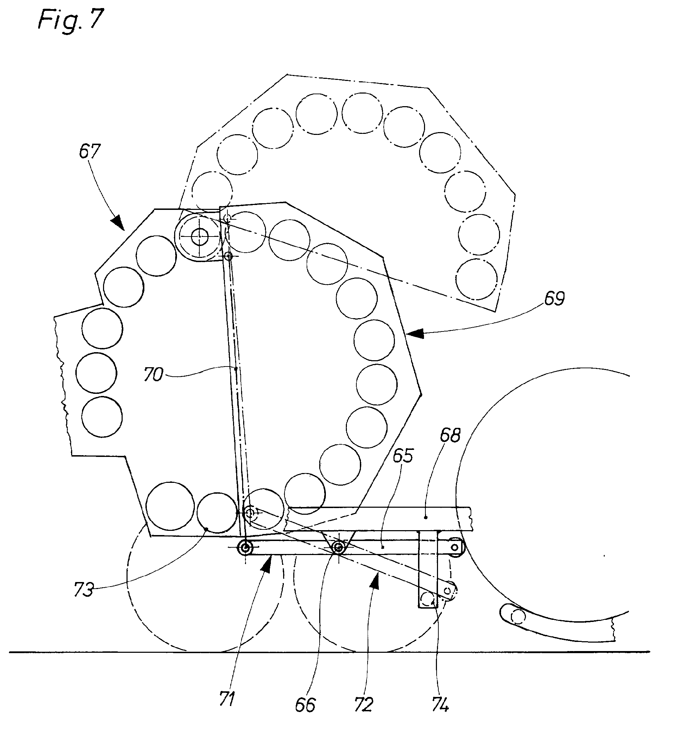

Bei dem in Fig. 7 dargestellten Ausführungsbeispiel sind zwei im Abstand nebeneinander angeordnete Rampen 65 nach Art einer Wippe um eine ortsfeste Drehachse 66 schwenkbar gelagert, die entweder an der Rundballenpresse 67 oder am Tragrahmen 68 angeordnet ist. Die Drehachse 66 ist etwa bei zwei Fünftel der Länge der Rampe 65 angeordnet. Die Betätigung der Rampen 65 erfolgt durch das Hintergehäuse 69 über eine Steuerstange 70. Bei geschlossenem Hintergehäuse 69 nehmen die Rampen 65 eine Ruhestellung 71 ein und schwenken bei Beginn der Öffnung des Hintergehäuses 69 in die Arbeitsstellung 72, in der sich das vordere Ende an die Preßwalze 73 anschließt und das hintere Ende auf dem Anschlag 74 liegt.

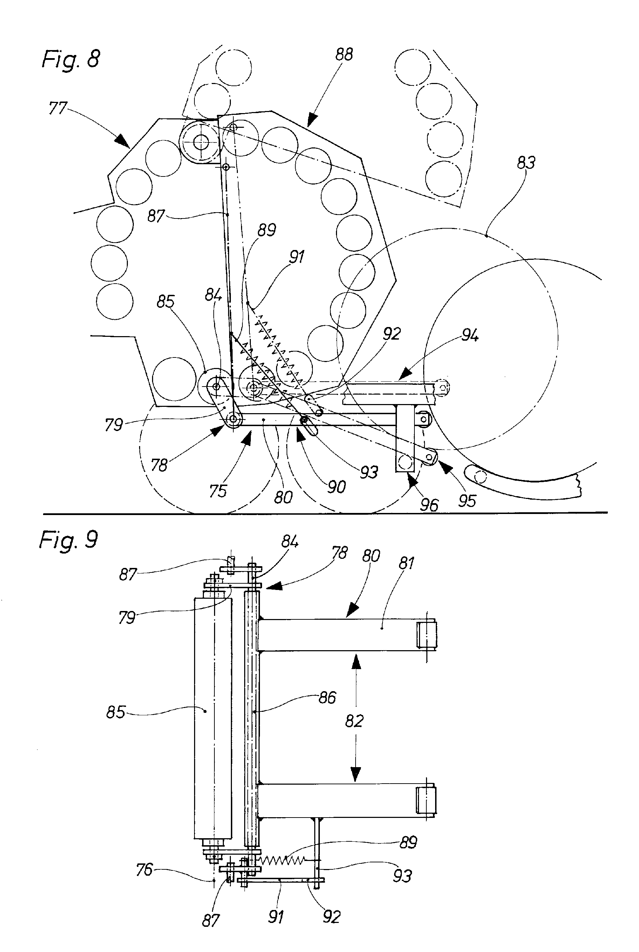

Das in Figur 8 und 9 dargestellte Ausführungsbeispiel einer Abrolleinrichtung 75 besteht aus einer um eine Drehachse 76 drehbar am Vordergehäuse 77 gelagerten Schwenkarmanordnung 78 mit nach vorn gerichteten Armen 79 und einem drehbar auf der Schwenkarmanordnung 78 gelagerten U-förmigen Bügel 80 mit nach hinten gerichteten Armen 81, welche die Rampen 82 für den Rundballen 83 bilden. Die nach vorn gerichteten Arme 79 sind drehfest aber lösbar mit einer sich über die Pressenbreite erstreckenden Querwelle 84 verbunden und auf gegenüberliegenden Pressenseiten koaxial auf den Wellenenden der Preßwalze 85 gelagert. Der U-förmige Bügel 80 wird von einem Querrohr 86 gebildet, an das die nach hinten gerichteten Arme 81 geschweißt sind. Das Querrohr 86 ist verschwenkbar auf der Querwelle 84. Wenigstens auf einer Seite ist eine Steuerstange 87 vorgesehen, welche die Schwenkarmanordnung 78 mit dem Hintergehäuse 88 verbindet. Zwischen Steuerstange 87 und U-förmigem Bügel 80 ist eine Zugfeder 89 vorgesehen, welche den Bügel 80 bei geschlossenem Hintergehäuse 88 in die in Fig. 8 in Volllinie gezeichnete Ruhestellung 90 zieht.

Zwischen Steuerstange 87 und Bügel 80 ist zur Begrenzung der Schwenkbewegung nach oben eine Kulissenstange 91 mit Langloch 92 angeordnet, in die ein am Bügel 80 befestigter Zapfen 93 eingreift. Gleich nach Öffnung des Hintergehäuses 88 wird der Bügel 80 durch die Steuerstange 87 zunächst nach oben in die in Fig. 8 in Strichlinie gezeichnete Stellung 94 bewegt, in der das vordere Ende des Bügels 80 hinter der Preßwalze 85 liegt. Beim Auswurf des Rundballens 83 drückt dieser die Rampen 82 in die in Fig. 8 in Strichlinie gezeichnete Arbeitsstellung 95, in der die Rampen 82 am Anschlag 96 aufliegen und eine steile schiefe Ebene bilden.

Durch das Verstellen der Abrolleinrichtungen 20, 21, 65, 78 in den nach Aufklappen des Hintergehäuses freigewordenen Raum ist trotz Kombination mit einem Wickelgerät auf einer schiefen Ebene die jeweils notwendige Neigung erreichbar, um den Rundballen oberhalb des Erdbodens sicher und schnell bis zur Wickelvorrichtung und aus dem Schwenkbogenbereich des Hintergehäuses rollen zu lassen, anstatt aufwendige, ablaufverzögernde, aktive Hebe- bzw. Fördereinrichtungen zu verwenden.

## Patentansprüche

1. Rundballenpresse (1, 67, 77) für landwirtschaftliche Halmgüter, welche in Kombination mit einer Wickelvorrichtung (3) zum Umwickeln eines Rundballens mit Folie auf wenigstens einem Fahrwerk angeordnet ist, wobei zwischen der Rundballenpresse (1, 67, 77) und der Wickelvorrichtung (3) wenigstens eine Abrolleinrichtung für den fertigen Rundballen (9, 42a, 83) vorgesehen ist, **dadurch gekennzeichnet, daß** die Abrolleinrichtung (20, 65, 75) verstellbar ausgebildet ist.

2. Rundballenpresse nach Anspruch 1, **dadurch gekennzeichnet, daß** die Abrolleinrichtung (20, 65, 75) um wenigstens eine horizontale, quer zur Abrollrichtung (63) des Rundballens (9, 42a, 83) gelegene Drehachse (37, 66, 76, 84) beweglich ist.

3. Rundballenpresse nach Anspruch 2, **dadurch gekennzeichnet, daß** eine Achse als Drehschiebeführung ausgebildet ist.

4. Rundballenpresse nach Anspruch 2 oder 3, **dadurch gekennzeichnet, daß** die Achse (76, 84) an der Rundballenpresse (77) angeordnet ist.

5. Rundballenpresse nach Anspruch 2 oder 3, **dadurch gekennzeichnet, daß** die Achse (37, 66) am Tragrahmen (2, 68) von Rundballenpresse (1, 67) und Wickelvorrichtung (3) angeordnet ist.

6. Rundballenpresse nach einem oder mehreren der vorhergehenden Ansprüche, **dadurch gekennzeichnet, daß** für die Abrolleinrichtung (20, 65, 75) wenigstens zwei Stellungen (22, 32, 72, 71, 95, 90) vorgesehen sind.

7. Rundballenpresse nach Anspruch 6, **dadurch gekennzeichnet, daß** die Abrolleinrichtung (20, 65, 75) bei geöffneter oder teilgeöffneter Position (8) des Hintergehäuses (10, 69, 88) wenigstens eine Arbeitsstellung (22, 72, 95) und bei geschlossener Position (25) des Hintergehäuses (10, 69, 88) eine Ruhestellung (32, 71, 90) einnimmt.

8. Rundballenpresse nach Anspruch 6 oder 7, **dadurch gekennzeichnet, daß** sich das in Fahrtrichtung (11) vordere Ende (27, 79) der Abrolleinrichtung (20, 75) in ihrer Arbeitsstellung (22, 94) in dem nach Aufklappen des Hintergehäuses (10, 88) freigewordenen Raum an die Preßelemente (5, 85) im Vordergehäuse (6, 77) anschließt.

9. Rundballenpresse nach einem der Ansprüche 6 bis 8, **dadurch gekennzeichnet, daß** das in Fahrtrichtung (11) hintenliegende Ende (39, 44, 81) der Abrolleinrichtung (20, 65, 75) in ihrer Arbeitsstellung (22, 95) während des Abrollens des Rundballens (42a, b, c) an einem gestellfesten Anschlag (40, 41, 74, 96) aufliegt.

10. Rundballenpresse nach Anspruch 9, **dadurch gekennzeichnet, daß** das hintenliegende Ende (39, 44, 81) der Abrolleinrichtung (20, 75) in ihrer Arbeitsstellung (22, 95) einen solchen Abstand zum Erdboden und zum Wickelgerät (3) hin aufweist, daß der Rundballen (42a, b, c) auf einer gedachten Verlängerung nach hinten bis zur Wickelvorrichtung (3) oberhalb des Erdbodens in eine Endposition (54) rollt, die außerhalb des äußeren Schwenkbogens (43) des Hintergehäuses (8) liegt.

11. Rundballenpresse nach einem der Ansprüche 6 bis 10, **dadurch gekennzeichnet, daß** das hintere Ende (39, 81) der Abrolleinrichtung (20, 65, 75) in ihrer Ruhestellung (32, 71, 90) über den äußeren Schwenkbogen (43) des Hintergehäuses (10, 69, 88) hinausragt.

12. Rundballenpresse nach einem der Ansprüche 6 bis 11, **dadurch gekennzeichnet, daß** die Abrolleinrichtung wenigstens in ihrer Arbeitsstellung in Längsrichtung kraftbeaufschlagt ein- und ausfahrbar ist.

13. Rundballenpresse nach einem der vorhergehenden Ansprüche, **dadurch gekennzeichnet, daß** die Abrolleinrichtung an beiden Seiten Leitbleche für die Seitenführung des Rundballens aufweist.

14. Rundballenpresse nach einem oder mehreren der vorhergehenden Ansprüche, **dadurch gekennzeichnet, daß** die Abrolleinrichtung (20, 65, 75) ein- oder mehrteilig ausgestaltet ist.

15. Rundballenpresse nach einem oder mehreren der vorhergehenden Ansprüche, **dadurch gekennzeichnet, daß** die Abrolleinrichtung (75) über Lenker (79) mit der Rundballenpresse (1) beziehungsweise mit dem Tragrahmen (2) gelenkig verbunden ist.

16. Rundballenpresse nach einem oder mehreren der vorhergehenden Ansprüche 6 bis 14, **dadurch gekennzeichnet, daß** die Abrolleinrichtung (65, 75) über eine Steuerstange (70, 87) mit dem Hintergehäuse (69, 88) kuppelbar ist.

17. Rundballenpresse nach einem oder mehreren der vorhergehenden Ansprüche 6 bis 15, **dadurch gekennzeichnet, daß** die Abrolleinrichtung (20, 65, 75) während des Öffnens des Hintergehäuses (10, 69, 88) kraftbeaufschlagt in ihre Arbeitsstellung (22, 72, 95) verstellt wird.

18. Rundballenpresse nach einem oder mehreren der vorhergehenden Ansprüche 6 bis 17, **dadurch gekennzeichnet, daß** die Abrolleinrichtung von zwei im Abstand nebeneinander angeordneten, um eine Achse (66, 76, 84) schwenkbaren Rampen (65, 82) gebildet wird.

19. Rundballenpresse nach Anspruch 18, **dadurch gekennzeichnet, daß** die Rampen (82) durch einen Quersteg (86) verbunden sind und einen U-förmigen Bügel (80) bilden.

20. Rundballenpresse nach einem oder mehreren der vorhergehenden Ansprüche, **dadurch gekennzeichnet, daß** der ersten Abrolleinrichtung (20) eine zweite, als Ballenhalteeinrichtung (21) ausgebildete Abrolleinrichtung nachgeschaltet ist, welche in einer Arbeitsstellung (21) eine verlängerte schiefe Ebene der ersten Abrolleinrichtung (20) bildet, auf der der Rundballen (42a, b, c) bis zum Wickeltisch (13) rollt.

21. Rundballenpresse nach Anspruch 20, **dadurch gekennzeichnet, daß** die Ballenhalteeinrichtung (21) um eine zur Achse (37) der Abrolleinrichtung (20) parallele Achse (49) drehbar an einem Wickeltisch (13) gelagert ist.

22. Rundballenpresse nach Anspruch 21, **dadurch gekennzeichnet, daß** der Wickeltisch (13) um eine am Tragrahmen (2) gelegene, horizontale Querachse (12) in eine Ladestellung (52), eine Wickelstellung (55) und eine Entladestellung (58) verschwenkbar ist.

23. Rundballenpresse nach einem der Ansprüche 20 bis 22, **dadurch gekennzeichnet, daß** der Wickeltisch (13) in seiner Ladestellung (52) mit der in ihrer Arbeitsstellung (23) befindlichen Ballenhalteeinrichtung (21) etwa einen rechten Winkel einschließt.

24. Rundballenpresse nach Anspruch 23, **dadurch gekennzeichnet, daß** der Rundballen (42c) in seiner Endlage (54) auf der Ballenhalteeinrichtung (21) am Wickeltisch (13) anliegt und gemeinsam mit dem Wickeltisch (13) in die Wickelstellung (55) geschwenkt wird.

25. Rundballenpresse nach den Ansprüchen 10, 11 und 24, **dadurch gekennzeichnet, daß** sich der äußere Schwenkbogen (43) des Hintergehäuses (10) und der äußere Schwenkbogen (64) des mit dem Wickeltisch (13) verschwenkten Rundballens (42c) nicht überschneiden.

26. Rundballenpresse nach Anspruch 22, **dadurch gekennzeichnet, daß** die Ballenhalteeinrichtung (21) in der Wickelstellung (55) des Wickeltisches (13) aus der Umlaufbahn einer umlaufenden Folienrolle (19) herausgeschwenkt ist und sich in dieser Ruhestellung (51) etwa parallel zum Wickeltisch (13) in Fahrtrichtung (11) nach vorn erstreckt.

27. Rundballenpresse nach einem oder mehreren der vorhergehenden Ansprüche, **dadurch gekennzeichnet, daß** für die Betätigung der Abrolleinrichtung (20, 65, 75) , der Ballenhalteeinrichtung (21) und/oder für den Wickeltisch (13) hydraulische (33, 31, 50, 59), mechanische (70, 87), elektrische und/oder pneumatische Mittel vorgesehen sind.

28. Rundballenpresse nach einem oder mehreren der vorhergehenden Ansprüche, **dadurch gekennzeichnet, daß** wenigstens die Betätigung der Abrolleinrichtung (20, 65, 75) direkt oder indirekt durch das Hintergehäuse (10, 69, 88) oder durch den Rundballen (42a, b, c, 83) erfolgt.

29. Rundballenpresse nach Anspruch 27 oder 28, **dadurch gekennzeichnet, daß** ein Sensor (35) vorgesehen ist, welcher während des Öffnens des Hintergehäuses (10) eine kraftbeaufschlagte Verstellung der Abrolleinrichtung (20) in die Arbeitsstellung (22) bewirkt.

30. Rundballenpresse nach einem oder mehreren der vorhergehenden Ansprüche, **dadurch gekennzeichnet, daß** die Schließung des Hintergehäuses (10), die Betätigung der Abrolleinrichtungen (20, 21) und/oder des Wickeltisches (13) direkt oder indirekt in Abhängigkeit von einem am Wickeltisch (13) angeordneten Sensor (53) erfolgt.

31. Rundballenpresse nach einem oder mehreren der vorhergehenden Ansprüche, **dadurch gekennzeichnet, daß** unterschiedliche Neigungen der Abrolleinrichtung (20, 65, 75) manuell einstellbar sind.

32. Rundballenpresse nach einem oder mehreren der vorhergehenden Ansprüche, **dadurch gekennzeichnet, daß** die Abrolleinrichtung (20, 65, 75) mit einer Steuer- und/oder Bedieneinheit (34) in Wirkverbindung steht, an der mehrere Neigungen der Abrolleinrichtung (20, 65, 75) voreinstellbar und vom Bediener vom Schlepper aus per Tastendruck einstellbar sind.

33. Rundballenpresse mit wenigstens einer Abrolleinrichtung zur Übergabe eines Rundballens an eine Wickelvorrichtung (3) oder zur Ablage eines Rundballens direkt auf den Erdboden, **dadurch gekennzeichnet, daß** die Rundballenpresse (1) oder die Wickelvorrichtung (3) eine Neigungsmeßeinrichtung (61) aufweist, welche die Schiefstellung der Rundballenpresse (1) oder der Wickelvorrichtung (3) relativ zur Lotrechten mißt.

34. Rundballenpresse nach Anspruch 33, **dadurch gekennzeichnet, daß** die Neigung der Abrolleinrichtung (20) automatisch in Abhängigkeit von der gemessenen Schiefstellung gesteuert oder geregelt wird.

35. Rundballenpresse nach Anspruch 33 oder 34, **dadurch gekennzeichnet, daß** der Kippwinkel des Wickeltisches (13) für das Entladen des Rundballens (57) und/oder die Kippgeschwindigkeit des Wickeltisches (13) in Abhängigkeit von der gemessenen Schiefstellung gesteuert oder geregelt wird.

36. Rundballenpresse nach einem oder mehreren der vorhergehenden Ansprüche, **dadurch gekennzeichnet, daß** die Rundballenpresse (1, 67, 77) und die Wickelvorrichtung (3) auf demselben Fahrwerk angeordnet sind.

37. Rundballenpresse nach einem oder mehreren der vorhergehenden Ansprüche, **dadurch gekennzeichnet, daß** die Wickelvorrichtung (3) von der Rundballenpresse (1, 67, 77) abbaubar ist und die Abrolleinrichtung (20, 65, 75) im Solobetrieb der Rundballenpresse (1, 67, 77) die gleiche Funktion behält.
